# EUROPÄISCHE PATENTSCHRIFT

(11) **EP 1 425 248 B1**
(45) Veröffentlichungstag und Bekanntmachung des Hinweises auf die Patenterteilung: **02.02.2005**
(21) Anmeldenummer: 02790176.8
(22) Anmeldetag: 13.07.2002
(51) Int. Cl.: C03B 33/033

(54) **VERFAHREN ZUM BRECHEN EINES EINGESCHNITTENEN WERKSTÜCKES**
METHOD FOR BREAKING A CUT WORKPIECE
PROCEDE POUR CASSER UNE PIECE DECOUPEE

(30) Priorität: 25.07.2001 DE 10136181
(43) Veröffentlichungstag der Anmeldung: 09.06.2004
(73) Patentinhaber: Schott AG, 55122 Mainz (DE)
(72) Erfinder: HÖTZEL, Bernd Christoph, 55286 Wörrstadt (DE)
(74) Vertreter: Dr. Weitzel & Partner
(86) Internationale Anmeldenummer: PCT/EP2002/007816
(87) Internationale Veröffentlichungsnummer: WO 2003/010101

(56) Entgegenhaltungen:
- AT-B- 399 144
- FR-A- 2 729 885
- US-A- 2 757 545
- US-A- 3 865 673

## Beschreibung

Die Erfindung betrifft ein Verfahren zum Brechen eines eingeschnitten Werkstückes, insbesondere eines Werkstückes aus Glas.

Es ist bekannt, Werkstücke vor dem Brechen zu ritzen bzw. einzuschneiden. Das Ritzen oder Einschneiden kann dabei mechanisch erfolgen. Häufig wird das Werkstück auch mittels Laser geritzt, um eine saubere Schnittfläche zu erzielen, die beim anschließenden Brechvorgang eine saubere Bruchkante begünstigt.

Ein Verfahren gemäß dem Oberbegriff des Anspruchs 1 ist aus Dokument AT 399 144B bekannt.

Eingeschnittene Werkstücke und auch lasergeritzte Werkstücke mit großer Materialstärke lassen sich mit konventionellen Brechtechniken jedoch nur bedingt brechen. Vor allem wenn ein Werkstück mit großer Materialstärke über eine lange Distanz gebrochen werden soll, weist die Bruchkante bei herkömmlichen Brechverfahren oft nur eine mangelhafte Qualität auf. Besonders im Ein- und Auslaufbereich ist die Bruchkante qualitativ geringwertig. So bilden sich am Schnittanfang und am Schnittende häufig sogenannte Nasen aus, deren Auftrittshäufigkeit und deren Ausprägung mit steigender Werkstoffdicke zunimmt. Diese Problematik tritt besonders beim Brechen von Werkstücken aus Glas auf. Eine Nase wird definiert als nicht senkrechter Bruch im Ein- bzw. Auslaufbereich einer Bruchkante, deren Länge in Abhängigkeit von der Glasstärke variiert. Die Abweichungen von der Senkrechten können je nach Glasstärke - gemessen von der Glasoberkante bis zur Glasunterkante - mehrere Millimeter betragen.

Insbesondere das Brechen von sehr langen, lasergeritzten Gläsern ist mit konventionellen Brechverfahren bei großen Glasstärken, zum Beispiel von 1 Millimetern oder mehr, nicht möglich. Besonders durch die eingebrachte Bruchkraft, die bei lasergeritzten Gläsern größer ist als bei konventionell eingeschnittenen Gläsern, erschwert oder verhindert ein Brechen des Glases mit qualitativ hochwertiger Bruchkante.

Aufgabe der vorliegenden Erfindung ist es, ein Verfahren zum Brechen eines eingeschnittenen Werkstückes darzustellen, das gegenüber dem Stand der Technik verbessert ist. Insbesondere soll das Verfahren das Brechen von Werkstücken größerer Stärke ermöglichen, wobei die Bruchkante qualitativ hochwertig sein soll. Zudem soll das Verfahren kostengünstig ausgeführt werden können.

Diese Aufgabe wird durch ein Verfahren mit den Merkmalen des Anspruches 1 gelöst. Die abhängigen Ansprüche beschreiben besonders vorteilhafte Ausgestaltungen.

Das Werkstück weist eine Stärke von 1 Millimetern oder mehr auf, insbesondere von 6 Millimetern oder mehr. Solche Werkstücke können mit herkömmlichen Brechverfahren nicht mit einer sauberen Bruchkante gebrochen werden.

Das erfindungsgemäße Verfahren eignet sich insbesondere für das Brechen von geritztem bzw. eingeschnittenem Glas. Erfindungsgemäß wird das Werkstück mit seiner eingeschnittenen Oberfläche gegen ein Widerlager angelegt. Auf der gegenüberliegenden Oberfläche wird ein Eindringkörper positioniert. Diese Positionierung erfolgt dabei derart, daß sich der Eindringkörper mit einem an der ihm zugewandten Oberfläche anliegenden Eindringbereich über wenigstens einen Teil der Länge des Einschnittes erstreckt, und zwar bis wenigstens zu einem Endbereich des Einschnittes. Dieser Eindringbereich des Eindringkörpers befindet sich in der Einschnittsebene. Erfindungsgemäß wird der Eindringkörper mit seinem Eindringbereich derart in das Werkstück eingedrückt, daß die Eindringtiefe des Eindringbereiches in einem Endbereiches des Einschnittes am größten ist. Die Tiefe des Eindringens im Endbereich des Einschnittes ist dabei relativ zu der Eindringtiefe im restlichen Bereich des Einschnittes zu sehen. Es kommt auch nicht absolut betrachtet auf eine große Eindringtiefe an, sondern die Eindringtiefe wird in vielen Fällen aufgrund des harten Werkstückes, wie zum Beispiel Glas, marginal sein. Der Eindringkörper übt mit seinem Eindringbereich auf die Oberfläche, in welche er eingedrückt wird, eine Druckspannung aus, die auf der Gegenseite durch das Widerlager aufgenommen wird. Auf der Gegenseite, der eingeschnittenen Oberfläche, entsteht dadurch, weil erfindungsgemäß das Werkstück mit seiner eingeschnittenen Oberfläche beidseitig des Einschnittes gegen das Widerlager angelegt wird, eine Zugspannung quer zur Ausbreitungsrichtung des Einschnittes.

Der Eindringbereich des Eindringkörpers wird gegenüber der ihm zugewandten Oberfläche des Werkstückes um einen vorgegebenen Winkel α geneigt und anschließend parallel oder zumindest annähernd parallel in Richtung des Einschnittes bewegt. Dadurch wird eine unterschiedliche Eindringtiefe des Eindringbereiches über der Länge des Einschnittes erreicht, die erfindungsgemäß im Bereich eines Endes des Einschnittes am größten ist.

Erfindungsgemäß wird jedoch der Eindringbereich des Eindringkörpers zunächst parallel zu der ihm zugewandten Oberfläche des Werkstückes in das Werkstück eingedrückt, so daß sich der Schnitt aufgrund der Zugspannung öffnet, ohne daß das Werkstück bereits durch diesen Vorgang bricht. Dies kann dadurch verhindert werden, daß die Vorwärtsbewegung auf eine vorgegebene, anhand des Werkstoffes, der Geometrie und insbesondere der Wandstärke des Werkstückes ausgewählte Strecke begrenzt wird. Aufgrund des parallelen Eindrückens wird sich der Einschnitt dabei weitgehend gleichmäßig öffnen. Insbesondere gleichzeitig oder auch anschließend kann das Werkstück vorteilhaft im Bereich des Einschnittes erwärmt werden. Dies kann durch Beaufschlagung des Einschnittes mit Wasserdampf erfolgen.

Das Widerlager umfaßt in einer vorteilhaften Ausgestaltung des erfindungsgemäßen Verfahrens mindestens jeweils einen aufblasbaren Druckschlauch, der auf jeden Seite des Einschnittes positioniert wird. Die Positionierung erfolgt dabei vorteilhaft über der gesamten Länge des Werkstückes und insbesondere parallel zum Einschnitt. Vorteilhafter Weise kann der Druckschlauch zunächst auf der eingeschnittenen Oberfläche des Werkstückes angelegt werden und anschließend mit einem druckführenden Medium gefüllt werden. Dadurch wird der Schlauch gleichmäßig auf die Oberfläche angedrückt, und es wird eine gleichmäßige Krafteinbringung über die gesamte Länge erreicht.

Der Eindringkörper umfaßt vorteilhafter Weise eine solche Form, daß der Eindringbereich durch eine gerade ausgezogenen Kante, welche in das Werkzeug eingedrückt wird, begrenzt ist. Die Kante kann insbesondere spitz zulaufend sein oder aber auch mit einem Radius versehen sein. Der Winkel der Zuspitzung bzw. die Radiusgröße kann vorteilhaft in Abhängigkeit der Glasdicke festgelegt werden.

Eine qualitativ besonders hochwertige Bruchfläche kann dadurch erreicht werden, daß der Eindringbereich des Eindringkörpers über die gesamte Länge des Werkstückes in der Einschnittebene eingedrückt wird. So kann besonders zuverlässig das Auftreten von Nasen in den Endbereichen des Einschnittes verhindert werden.

Insbesondere bei Werkstücken aus Glas ist es vorteilhaft, wenn das Werkstück lasergeritzt ist.

Nachfolgend soll die Erfindung anhand eines Ausführungsbeispieles und den beigefügten Zeichnungen näher beschrieben werden.

Es zeigen:
- Figur 1:: eine schematische Darstellung des Anlegens eines Werkstückes gegen ein Widerlager und des Positionierens eines Eindringkörpers gemäß eines Ausführungsbeispieles des erfindungsgemäßen Verfahrens;
- Figur 2: eine schematische Darstellung eines gegenüber der ihm zugewandten Oberfläche des Werkstückes geneigten Eindringbereiches des Eindringkörpers;
- Figur 3: ein eingeschnittenes Werkstück, bei dem der Einschnitt aufgrund der durch den Eindringkörper aufgebrachten Druckkraft geöffnet ist.

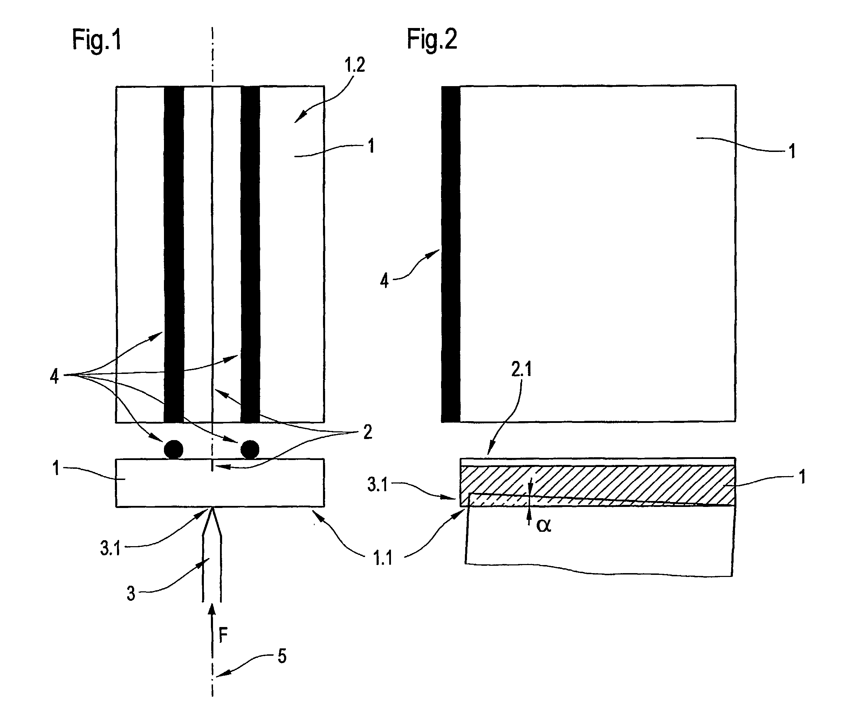

Figur 1 zeigt eine Draufsicht und eine Seitenansicht eines eingeschnittenen Werkstückes 1, zum Beispiel einer eingeschnittenen Glastafel. Der Einschnitt 2 kann insbesondere ein Laserritz sein. Erfindungsgemäß wird das Werkstück 1 mit seiner eingeschnittenen Seite 1.2 gegen ein Widerlager 4 angelegt. Das Widerlager umfaßt in diesem Ausführungsbeispiel zwei Druckschläuche, die in einem definierten Abstand zum Einschnitt 2 über der gesamten Länge des Werkstückes 1 parallel zum Einschnitt 2 angelegt sind. Nach der Positionierung können diese Schläuche mit einem flüssigen oder gasförmigen Medium gefüllt werden, so daß sie sich gleichmäßig gegen die Oberfläche 1.2 des Werkstückes 1 anpressen.

Auf der gegenüberliegenden Oberfläche 1.1 des Werkstückes 1 wird ein Eindringkörper 3 entlang des Einschnittes 2 positioniert. In diesem Ausführungsbeispiel wird der Eindringkörper 3 mit seinem Eindringbereich 3.1 in der Einschnittsebene 5 über die gesamte Länge des Einschnittes 2 auf der Werkstückoberfläche 1.1 angelegt.

Der Eindringkörper 3 wird nun parallel zur Oberfläche 1.1 angehoben, d.h. in Richtung des Einschnittes 2 bewegt. Dadurch entsteht auf der Unterseite - Werkstoffoberfläche 1.1 - eine Druckspannung und auf der Oberseite - Werkstoffoberfläche 1.2 - eine Zugspannung quer zur Ausbreitungsrichtung des Einschnittes 2. Würde man nun die Brechkraft erhöhen, indem der Eindringkörper 3 weiter in Richtung des Einschnittes 2 angehoben würde, so entstände eine Bruchkante mit schlechter Qualität und großen Ein- und Auslaufnasen, d.h. Nasen in den beiden Endbereichen des Einschnittes 2. Gläser mit einer Glasdicke oberhalb von 6 mm würden sich zum Beispiel auf diese Art und Weise nicht mehr brechen lassen.

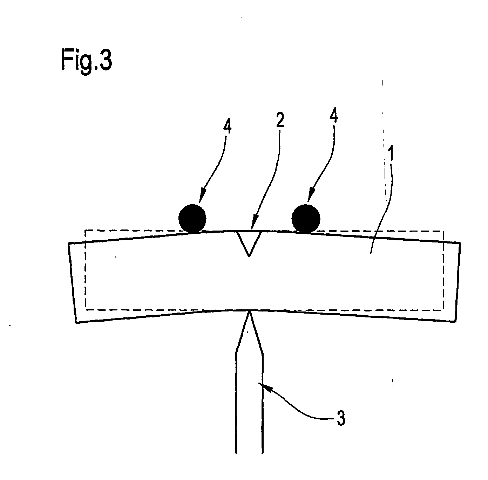

Der Einschnitt 2 kann nun vorteilhaft mit Wasserdampf angeblasen werden, was insbesondere zusammen mit einem leichten Parallelverschieben des Eindringkörpers 3 in Richtung des Einschnittes 2 zu einem Öffnen des Einschnittes 2 über der gesamten Länge führt. Ein solcher Zustand ist in Figur 3 dargestellt.

Erfindungsgemäß wird nun der Eindringkörper 3 mit seinem Eindringbereich 3.1 derart in das Werkstück 1 eingedrückt, daß die Eindringtiefe im Bereich eines Endes - dem in Figur 2 dargestellten Ende 2.1 des Einschnittes 2 - am größten ist. Wie insbesondere in Figur 2 deutlich wird, wird dies durch Neigen des Eindringbereiches 3.1 des Eindringkörpers 3 gegenüber der ihm zugewandten Oberfläche 1.1 des Werkstückes 1 um einen vorgegebenen Winkel α erreicht. Dabei ist das Eindringen des Eindringbereiches 3.1 überzogen dargestellt, um das Neigen zu verdeutlichen. In der Realität wird, insbesondere wenn ein sehr hartes Werkstück 1 gebrochen wird, die Eindringtiefe nur marginal sein.

Durch das tiefere Eindringen des Eindringbereiches 3.1 in dem dargestellten Ende 2.1 des Einschnittes 2 setzt sich ein anfänglicher Bruch ausgehend vom Einschnitt 2 über die gesamte Werkstoffdicke in den ersten Millimetern des Einschnittes 2 fort. Dieser anfängliche Bruch kann nun mit sehr geringer Bruchkraft über die gesamte Werkstücklänge bzw. über den gesamten Einschnitt 2 fortgesetzt werden, indem man den Eindringkörper nun unter dem vorher eingestellten Winkel α parallel zur Werkstück-Oberfläche 1.1 in Richtung des Einschnittes 2 bewegt, das heißt, in dem dargestellten Fall anhebt.

Die Schläuche des Widerlagers 4 wirken in dem dargestellten Ausführungsbeispiel als Gegenhalter.

Das Ergebnis ist eine Bruchkante, die weder im Ein- noch im Auslaufbereich Nasen aufweist. Eine besonders hohe Qualität der Bruchfläche kann erreicht werden durch eine sehr genaue Positionierung des Eindringbereiches 3.1 des Eindringkörpers 3 unterhalb des Einschnittes 2 und einen definierten Abstand der Schläuche vom Einschnitt 2, insbesondere in Abhängigkeit der Werkstückstärke.

### Bezugszeichenliste

- 1: Werkstück
- 1.1: Oberfläche
- 1.2: Oberfläche
- 2: Einschnitt
- 2.1: Endbereich
- 3: Eindringkörper
- 3.1: Eindringbereich
- 4: Widerlager
- 5: Einschnittebene

## Patentansprüche

1. Verfahren zum Brechen eines eingeschnittenen Werkstückes (1) aus Glas mit einer Wandstärke von 1 Millimeter oder mehr, umfassend die folgenden Schritte:
das Werkstück (1) wird mit seiner eingeschnittenen Oberfläche (1.2) gegen ein Widerlager (4) mit zwei Druckschläuchen derart angelegt, daß die beiden Druckschläuche in einem definierten Abstand zum Einschnitt (2) über der gesamten Länge des Werkstückes (1) parallel zum Einschnitt (2) angelegt sind;
auf der gegenüberliegenden Oberfläche (1.1) wird ein Eindringkörper (3) derart positioniert, daß
er sich mit einem an der Oberfläche (1.1) anliegenden Eindringbereich (3.1) wenigstens über einen Teil der Länge des Einschnittes (2) bis wenigstens zu einem Endbereich (2.1) desselben erstreckt, und
daß sich der Eindringbereich (3.1) des Eindringkörpers (3) in der Einschnittebene (5) befindet;
der Eindringkörper (3) wird nachfolgend in Richtung des Einschnittes (2) bewegt, wobei er parallel zur Oberfläche (1.1) bleibt, soweit, daß eine Zugspannung in der Werkstoffoberfläche (1.1) quer zur Ausbreitungsrichtung des Einschnittes (2) aufgebaut wird **dadurch gekennzeichnet, dass** der Einschnitt (2) sich über der gesamten Länge öffnet, ohne jedoch zu brechen;
der Eindringkörper (3) anschließend um einen vorgegebenen Winkel α geneigt, wird so daß die Eindringtiefe im Bereich eines Endes (2.1) des Einschnittes (2) am größten ist;
der Eindringkörper (3) anschließend unter Beibehaltung des eingestellten Winkels α parallel zur Werkstoffoberfläche (1.1) in Richtung des Einschnittes (2) bewegt, wird.

2. Verfahren gemäß Anspruch 1, **dadurch gekennzeichnet, daß** das Werkstück eine Wandstärke von 6 Millimetern oder mehr aufweist.

3. Verfahren gemäß Anspruch 1 oder 2, **dadurch gekennzeichnet, daß** der Druckschlauch nach dem Anlegen auf der eingeschnittenen Oberfläche (1.2) des Werkstückes (1) mit einem druckführenden Medium gefüllt wird.

4. Verfahren gemäß einem der Ansprüche 1 bis 3, **dadurch gekennzeichnet, daß** das Werkstück (1) im Bereich des Einschnittes (2) erwärmt wird, insbesondere durch Beaufschlagung des Einschnittes (2) mit Wasserdampf, insbesondere zeitlich nach dem oder gleichzeitig mit dem Eindrücken des Eindringbereiches (3.1) gemäß Anspruch 5.

5. Verfahren gemäß einem der Ansprüche 1 bis 4, **dadurch gekennzeichnet, daß** das Werkstück (1) lasergeritzt ist.

6. Verfahren gemäß einem der Ansprüche 1 bis 5, **dadurch gekennzeichnet, daß** der Eindringbereich (3.1) durch eine gerade ausgezogene Kante, welche in das Werkstück (1) eingedrückt wird, begrenzt ist, wobei die Kante insbesondere spitz zulaufend ist.

7. Verfahren gemäß einem der Ansprüche 1 bis 6, **dadurch gekennzeichnet, daß** der Eindringbereich (3.1) des Eindringkörpers (3) über die gesamte Länge des Werkstückes (1) eingedrückt wird.

## Claims

1. A method for breaking a notched workpiece (1) made of glass with a wall thickness of 1 millimeter or more, comprising the following steps:
the workpiece (1) is placed with its notched surface (1.2) against an abutment (4) with two pressure hoses in such a way that the two pressure hoses are applied at a defined distance to the notch (2) over the entire length of the workpiece (1) parallel to the notch (2); a penetrating body (3) is positioned on the opposite surface (1.1) in such a way that it extends with a penetration region (3.1) resting on the surface (1.1) at least over a part of the length of the notch (2) up to at least an end region (2.1) of the same, and that the penetration region (3.1) of the penetrating body (3) is situated in the notch plane (5); the penetrating body (3) is subsequently moved in the direction of the notch (2), with the same remaining parallel to the surface (1.1), to such an extent that a tensile stress is established in the surface (1.1) of the workpiece transversally to the direction of propagation of the notch (2), **characterized in that** the notch (2) opens over the entire length without breaking however; the penetrating body (3) thereafter is inclined by a predetermined angle α, so that the penetration depth is highest in the region of one end (2.1) of the notch (2); the penetrating body (3) thereafter is moved by maintaining the set angle α parallel to the surface (1.1) of the workpiece in the direction of the notch (2).

2. A method according to claim 1, **characterized in that** the workpiece has a wall thickness of 6 millimeters or more.

3. A method according to claim 1 or 2, **characterized in that** the pressure hose is filled with a pressurized medium after the application on the notched surface (1.2.) of the workpiece (1).

4. A method according to one of the claims 1 to 3, **characterized in that** the workpiece (1) is heated in the region of the notch (2), especially by subjecting the notch (2) to steam, especially with respect to time after or simultaneously with the pressing in of the penetration region (3.1) according to claim 5.

5. A method according to one of the claims 1 to 4, **characterized in that** the workpiece (1) is laser-notched.

6. A method according to one of the claims 1 to 5, **characterized in that** the penetration region (3.1) is delimited by a straight drawn edge which is pressed into the workpiece (1), with the edge being especially tapering.

7. A method according to one of the claims 1 to 6, **characterized in that** the penetration region (3.1) of the penetrating body (3) is pressed in over the entire length of the workpiece (1).

## Revendications

1. Procédé pour casser une pièce (1 ) entaillée en verre ayant une épaisseur de 1 millimètre ou plus, comprenant les étapes suivantes :
la pièce (1) est posée avec sa surface entaillée (1.2) contre un contre-appui (4) avec deux tuyaux sous pression, de telle sorte que les deux tuyaux sous pression soient posés à une distance définie de l'entaille (2) sur toute la longueur de la pièce (1) parallèlement à l'entaille (2) ;
un outil de pénétration (3) est positionné sur la surface (1.1) opposée, de telle manière
qu'il s'étende avec une partie de pénétration (3.1) reposant sur la surface (1.1) sur une partie au moins de l'entaille (2) jusqu'à une partie d'extrémité (2.1) au moins de celle-ci, et
que la partie de pénétration (3.1) de l'outil de pénétration (3) se trouve dans le plan (5) de l'entaille ;
l'outil de pénétration (3) est ensuite déplacé dans la direction de l'entaille (2) en restant parallèle à la surface (1.1), jusqu'à ce qu'il se crée une contrainte de traction dans la surface (1.1) de la pièce perpendiculairement au sens de propagation de l'entaille (2),
**caractérisé en ce que** l'entaille (2) s'ouvre sur toute sa longueur sans se casser;
l'outil de pénétration (3) est ensuite incliné selon un angle α prédéterminé de telle sorte que la profondeur de pénétration soit maximale au niveau d'une extrémité (2.1) de l'entaille (2) ;
et l'outil de pénétration (3) est ensuite déplacé dans la direction de l'entaille (2) parallèlement à la surface (1.1) de la pièce en conservant l'angle α ajusté.

2. Procédé selon la revendication 1, **caractérisé en ce que** la pièce a une épaisseur de 6 millimètres ou plus.

3. Procédé selon la revendication 1 ou 2, **caractérisé en ce que** le tuyau sous pression est rempli, après avoir été posé sur la surface entaillée (1.2) de la pièce (1), avec un fluide véhiculant la pression.

4. Procédé selon l'une quelconque des revendications précédentes, **caractérisé en ce que** la pièce (1) est chauffée au niveau de l'entaille (2), en particulier par exposition de l'entaille (2) à de la vapeur d'eau, en particulier avant ou pendant l'enfoncement de la partie de pénétration (3.1) selon la revendication 5.

5. Procédé selon l'une quelconque des revendications 1 à 4, **caractérisé en ce que** la pièce (1 ) est chauffée par laser.

6. Procédé selon l'une quelconque des revendications 1 à 5, **caractérisé en ce que** la partie de pénétration (3.1) est délimitée par une arête droite et allongée qui est enfoncée dans la pièce (1 ) et qui est notamment rétrécie en pointe.

7. Procédé selon l'une quelconque des revendications 1 à 6, **caractérisé en ce que** la partie de pénétration (3.1) de l'outil de pénétration (3) est enfoncée sur toute la longueur de la pièce (1).
